# EUROPÄISCHE PATENTANMELDUNG

(11) **EP 0 844 722 A1**
(43) Veröffentlichungstag der Anmeldung: **27.05.1998**
(21) Anmeldenummer: 97120635.4
(22) Anmeldetag: 25.11.1997
(51) Int. Cl.: H02K 1/27

(54) **Dauermagnetisch erregte elektrische Maschine mit Rotorrückschluss**

(30) Priorität: 25.11.1996 DE 19648758
(71) Anmelder: Magnet-Motor Gesellschaft für magnetmotorische Technik mbH, D-82319 Starnberg (DE)
(72) Erfinder: Ehrhart, Peter,Dr., 81375 München (DE); Reiner, Gerhard,Dr., 82396 Pähl (DE)
(74) Vertreter: Klunker . Schmitt-Nilson . Hirsch

(57) **Zusammenfassung**

Bei einer dauermagnetisch erregten elektrischen Maschine (Motor, Generator), die zum Beispiel in Außenläuferbauart ausgeführt ist, steht dem Stator (32) der Rotor (33) mit Dauermagneten (38) und Rotorrückschluß (35) in radialer Richtung gegenüber. Der Rotorrückschluß (35) ist als geschichtetes Blechronden-Paket (36) ausgeführt, welches selbst als Rotorträger fungiert und zu diesem Zweck beispielsweise mit Schraubenbolzen (42) am Außenumfang eines Rotorflansches (34) befestigt ist, wobei das Blechronden-Paket (36) in axialer Richtung mit den Dauermagneten (38) und den wirksamen Teilen des Stators (32) fluchtet. Durch die geblechte Ausführung des Rotorrückschlusses lassen sich Verluste durch Wirbelströme in dem Rotorrückschluß weitestgehend ausschalten. Zur weiteren Reduzierung von Verlusten durch Wirbelströme können auch die Dauermagnete (38) selbst als Lamellenpaket ausgeführt sein, und zwar insbesondere dann. wenn der spezifische elektrische Widerstand der Dauermagnete weniger als 2 Ω mm²/m beträgt.

## Beschreibung

Die Erfindung betrifft eine dauermagnetisch erregte elektrische Maschine mit einem Stator und einem Rotor, der Dauermagnete und einen ferromagnetischen Rotorrückschluß aufweist.

Eine solche Maschine kann als Motor oder als Generator ausgeführt sein oder betrieben werden. Als Varianen kommen Maschinen in sogenannter Außenläuferbauweise und in Innenläuferbauweise in Betracht. Bei in Außenläuferbauweise ausgeführten Maschinen ist der Rotor im Prinzip becherförmig ausgebildet und bildet einen Hohlraum, in dem der Stator mit seinen Statorwicklungen feststehend angeordnet ist. Bei einer Maschine in Innenläuferbauweise befindet sich der Stator außen, und in einem von dem Stator gebildeten Innenraum dreht sich der Permanentmagnet-Rotor.

Im folgenden wird speziell auf einen Elektromotor Bezug genommen, wobei der Fachmann jedoch versteht, daß die Angaben entsprechend auch für einen Generator gelten. Soweit nicht speziell zwischen Maschine in Außenläuferbauweise und Innenläuferbauweise unterschieden ist, beziehen sich die Angaben sowohl auf die eine als auch die andere Ausführung.

Im einfachsten Fall enthält der Rotor einen Permanentmagneten mit einem Nordpol und einem Südpol, wobei die beiden Pole durch zwei Hälften eines Zylinderkörpers (bei einem Motor in Innenläuferbauweise) bzw. eines Hohlzylinders (bei einem Motor in Außenläuferbauweise) gebildet werden. Bei einem eine höhere Polzahl aufweisenden Motor besitzt der Motor mehrere auf einem imaginären Zylindermantel angeordnete Dauermagneten, die mit ihren Polen in radialer Richtung orientiert sind. Aus bekannten Gründen ist zusätzlich zu den Dauermagneten auf der dem Stator abgewandten Seite ein ferromagnetischer Rotorrückschluß vorgesehen. Es ist bekannt, diesen Rückschluß aus einem Stück zu formen.

Allgemein ist es bei elektrischen Maschinen bekannt, den Stator und/oder den Rotor geblecht auszuführen, das heißt, die Statorwicklungen bzw. die Rotorwicklungen sitzen auf einem Blechlamellenpaket oder sind in ein solches Paket eingebettet. Der Zweck dieser "Blechung" besteht darin, durch den die Wicklungen durchfließenden Strom in dem Eisen entstehende Wirbelstromverluste weitestgehend zu vermeiden.

Allerdings ist. man bei dauermagnetisch ertegten Maschinen bislang davon ausgegangen, daß der Rotorrückschluß wegen der Dauermagnete, also der nicht-vorhandenen Spulenwicklungen, als einstückiges Metallteil ausgebildet werden kann, da in dem Rotorrückschluß praktisch keine Verluste entstünden.

Nun sind aber in den vergangenen Jahren dauermagnetisch erregte elektrische Maschinen mit immer höherer Leistung entwickelt worden, begünstigt durch konstruktive Maßnahmen, spezielle Steuerschaltungen mit höheren Schaltfrequenzen und in der Zwischenzeit verfügbar gewordene sehr starke Dauermagnete.

Es wurde nun erkannt, daß in dem Rotor während des Betriebs tatsächliche Verluste entstehen, die insbesondere bei Maschinen höherer Leistung nicht mehr vernachlässigt werden können. Die Verluste im Rotor werden durch zwei Mechanismen erzeugt, nämlich einerseits Reluktanzen, das sind Änderungen der Flußdichte im Rotor, während der Drehung des Motors, verursacht durch ausgeprägte Lücken im Stator (Statorzähne), andererseits durch schnelle Hübe des magnetischen Flußes im Rotor. Diese schnellen Hübe werden verursacht durch schnelle Änderung des Spulenstroms im Stator.

Die Frequenz der schnellen Hübe des magnetischen Flußes im Rotor entspricht der Grundfrequenz der Maschine, das heißt der Drehzahl multipliziert mit der Anzahl der Dauermagnetpole. Zu diesen Komponenten addieren sich noch Komponenten höherer Frequenzen, die aus Oberwellen und der Stromtaktung des Wechselrichters herrühren, welcher Strom in die Statorspulen einspeist.

Die Hübe des magnetischen Flusses weisen also Frequenzen auf, die höher liegen als die Umlauffrequenz oder Drehzahl des Rotors. Damit sind diese Hübe des magnetischen Flusses Ursache für die Entstehung von Wirbelströmen in dem sich drehenden Rotor. Wirbelströme bedeuten Verluste.

Die vorliegende Erfindung zielt darauf ab, solche Verluste im Rotor zu vermeiden. Die Verluste entstehen nicht nur im Rotorrückschluß, sondern auch in den Dauermagneten selbst.

Am wirkungsvollsten lassen sich die Verluste verringern, wenn man erfindungsgemäß den Rotorrückschluß als geblechten Rückschluß ausführt. In einer besonders günstigen und selbständig geschützten Ausführungsform besteht der Rotorrückschluß aus gestanzten und in Ebenen senkrecht zur Drehachse isoliert zueinander paketierten Blechronden, deren in einer Richtung parallel zur Achse gemessene Paketlänge der Länge der Dauermagnete entspricht, wobei die Dauermagnete in radialer Richtung mit am Umfang wechselnden Vorzeichen magnetisiert sind. Bei einer Maschine in Innenläuferbauart sitzen die Dauermagnete auf der äußeren Umfangsfläche des Blechrondenpakets. Bei einer Maschine in Außenläuferbauart finden sich die Dauermagnete an der inneren Umfangsfläche des Blechrondenpakets. Als weitere Maßnahme zur Verringerung der Verluste im Rotor sieht die Erfindung vor, auch die Dauermagnete selbst "geblecht" auszuführen, das heißt die Dauermagnete aus einzelnen, voneinander isolierten Lamellen zusammenzusetsen. Diese Maßnahme ist insbesondere dann von Bedeutung, wenn die Dauermagnete einen spezifischen elektrischen Widerstand von weniger als 2 Ω mm²/m aufweisen. Derart geringe spezifisch elektrische Widerstände sind vornehmlich bei Dauermagneten von Selten-Erd-Typ anzutreffen, beispielsweise bei Dauermagneten aus Samarium-Kobald. Bei spezifischen elektrischen Widerständen oberhalb von 2 Ω mm²/m ist die Ausführung der Dauermagnete als Lamellenpaket kaum lohnend, da die Verluste nicht so hoch sind. Die Richtung der Lamellierung kann senkrecht oder parallel zur Richtung der Achse der Maschine verlaufen. Sie darf allerdings nicht radial verlaufen, obschon eine solche Schichtung sehr einfach zu realisieren wäre, beispielsweise durch Bandagieren der Rotoranordnung auf der Innenseite oder Außenseite.

Die Schichtung der Dauermagnetlamellen erfolgt bevorzugt in Umfangsrichtung des Rotors. Damit ist die Schichtung ebenso wie die Paketierung des Rotorrückschlusses derart beschaffen, daß sich die einzelnen Schichten senkrecht zur Drehachse des Rotors orientieren. Zwar ist auch eine Schichtung in Umfangsrichtung möglich, das heißt eine Schichtung, bei der die einzelnen Lamellen oder Blechronden in Radialebenen liegen, jedoch ist eine solche Schichtung weniger praktikabel. Dies gilt vornehmlich für den Rotorrückschluß; denn die Dauermagnete lassen sich durchaus etwa in Umfangsrichtung schichten, so daß die Lamellen etwa parallel zu den Radialebenen, welche die Drehachse schneiden, verlaufen.

Damit die Lamellierung der Dauermagnete bzw. die Blechung des Rotorrückschlußes ausreichende Wirkung zeigt, ist die Dicke der Lamellen bzw. der Blechronden begrenzt. Für die Dauermagnete wird eine maximale Lamellendicke von 25 mm als Obergrenze vorgeschlagen. Für die Blechronden ist eine maximale Blechdicke von 1 mm erforderlich, damit die Verluste in nennenswertem Umfang eingeschränkt werden.

Bekannte elektrische Maschinen enthalten einen Rotor in Form eines Rotorträgers und daran gelagerten Dauermagneten. Zwischen dem Rotorträger und den Dauermagneten befindet sich der Rotorrückschluß. Eine derartige Ausführung ist auch erfindungsgemäß dann möglich, wenn der Rotorrückschluß durch ein Blechronden-Paket gebildet wird.

Demgegenüber bevorzugt wird aber, wenn das Blechronden-Päket selbst als Rotorträger ausgebildet ist. Bei einem Rotor, der als Außenläufer eingesetzt wird, gibt es einen Rotorflansch, das heißt eine Scheibe, die sich in einer Ebene senkrecht zur Drehachse des Rotors erstreckt. An einer Seite in der Nähe des Außenumfangs dieses Rotorflansches befindet sich bei bekannten Maschinen der Rotorträger, auf dessen Innenseite Rotorrückschluß und Dauermagnete angeordnet sind. Erfindungsgemäß können nun an einer Seite des Rotorflansches an dessen Umfangsbereich die Blechronden durch Verkleben oder durch Zugbolzen als Paket angebracht sein, wobei dieses Paket dann auf der Innenseite die Dauermagnete des Rotors trägt. Zur Positionierung und Fixierung der Dauermagnete auf der inneren Umfangsfläche des Blechrondenpakets sind in diesem nach innen vorspringende Nasen ausgebildet, die passende Ausnehmungen für die Dauermagnete bilden. Das Blechronden-Paket hat eine solche axiale Länge und ist derart eingestellt, daß der durch das Paket gebildete Rotorrückschluß axial bündig mit dem Stator ist. Wenn der Rotorflansch einen gewissen Abstand von dem Stator aufweist, kann zwischen dem Blechronden-Paket und der diesem zugewandten Seite des Rotorflansches noch ein Distanzstück angeordnet werden, damit das Blechronden-Paket des Rotorrückschlusses exakt mit dem Stator ausgerichtet ist.

Die obigen Ausführungen beziehen sich speziell auf eine Maschine in Außenläuferbauart. Eine entsprechende Gestaltung ist aber auch für eine elektrische Maschine in Innenläuferbauart möglich.

Wenn erfindungsgemäß der geblechte Rotorrückschluß selbst als Rotorträger fungiert, werden die Blechronden mit elektrisch isolierten Schraubenbolzen, die als Zuganker wirken, an dem Rotorflansch gehalten. Man kann das Blechronden-Paket auch durch Verkleben der einzelnen Blechronden bilden und dieses Paket dann mit einer Stirnseite an der gegenüberliegenden Fläche des Rotorflansches ankleben. Außerdem kommt ein Aufschrumpfen des Blechronden-Pakets an einem Teil der Rotoranordnung in Betracht.

Im folgenden werden Ausführungsbeispiele der Erfindung anhand der Zeichnung näher erläutert. Es zeigen:
- Fig. 1: eine Teil-Längsschnittansicht durch einen Elektromotor in Außenläuferbauart;
- Fig. 2: eine Teil-Längsschnittansicht durch einen Elektromotor in Innenläuferbauart;
- Fig. 3: eine perspektivische Ansicht eines Rotors mit Rotorrückschluß für eine erfindungsgemäße elektrische Maschine;
- Fig. 4: eine Teil-Längsschnittansicht durch eine weitere Ausführungsform einer erfindungsgemäßen elektrischen Maschine; und
- Fig. 5: eine Teil-Querschnittansicht eines Rotors senkrecht zu dessen Drehachse.

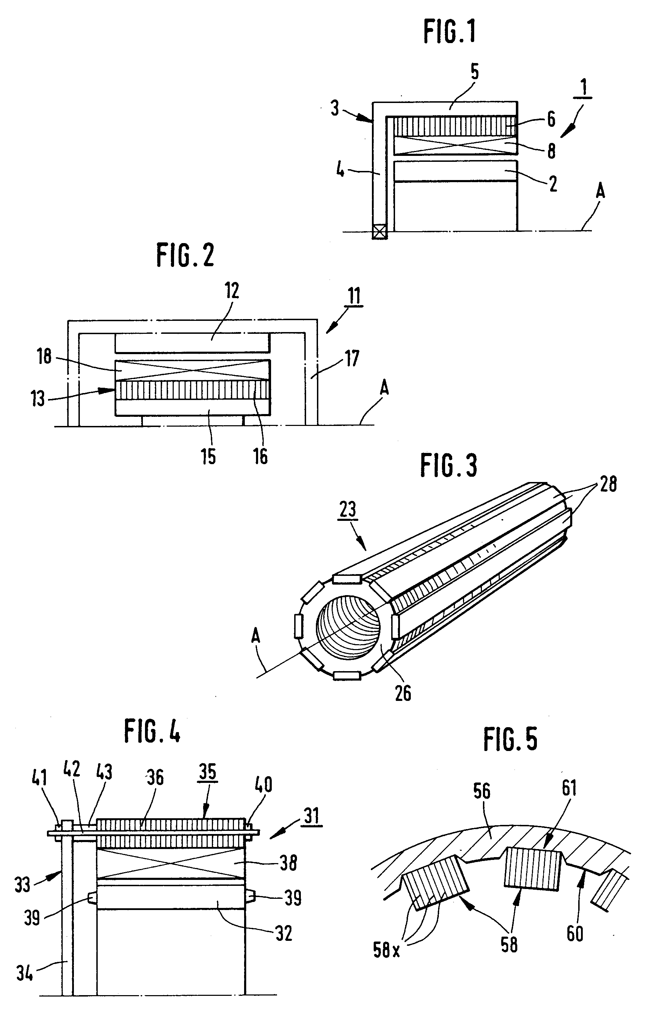

Der in Fig. 1 schematisch dargestellte Elektromotor oder Generator ist in Außenläuferbauweise ausgeführt. Ein auf einer Achse A drehbar gelagerter Rotor 3 bildet einen Hohlraum, in welchem feststehend ein Stator 2 angeordnet ist. Der Stator 2 besitzt Spulenwicklungen, die von einer nicht dargestellten Umrichterschaltung mit Strom gespeist werden. Der in Fig. 1 gezeigte Elektromotor kann auch als Generator angetrieben werden, wenn der Rotor 3 mechanisch angetrieben wird.

Der Rotor 3 besitzt einen Rotorflansch 4, der sich senkrecht zu der Drehachse A erstreckt, und einen einstückig außen an dem Rotorflansch 4 angeformten Rotorträger 5, der zylinderförmig ausgebildet ist. Damit hat der Rotor 3 eine Becher- oder Glockenform. Auf der Innenseite des Rotorträgers 5 sitzt als Rotorrückschluß ein Blechronden-Paket 6, und auf dessen Innenseite sind mit Umfangsabstand mehrere Dauermagnete 8 angeordnet, die mit ihren Nord- und Südpolen jeweils radial orientiert sind.

Der Rotorrückschluß in Form des Blechronden-Pakets 6 besteht aus 0,35 mm starken, gestanzten Eisenblechronden, die mit isolierendem Klebstoff zu einem Stab oder Paket zusammengebaut sind. Dieses Blechronden-Paket 6 ist an der Innenfläche des Rotorträgers 5 angeklebt, und auf der Innenseite des Blechronden-Pakets 6 sind die Dauermagnete 8 angeklebt.

Die Verbindung vom Rotorträger 5, Blechronden-Paket 6 und Dauermagneten 8 kann auch in anderer, an sich bekannter Weise erfolgen, beispielsweise kann der Rotorträger 5 auf den Außenumfang des Blechronden-Pakets 6 aufgeschrumpft sein. Die Dauermagnete 6 können in weiter unten noch näher erläuterte Ausnehmungen im Innenumfang des Blechronden-Pakets 6 eingepreßt sein.

Durch die geblechte oder lamellierte Ausführung des Rotorrückschlußes werden die eingangs erläuterten Wirbelstromverluste zum größten Teil ausgeschaltet.

Fig. 5 zeigt eine andere Ausführungsform eines Rotors in einer Teil-Querschnittansicht entsprechend einer zur Drehachse des Rotors senkrechten Ebene. Man erkennt einen Umfangs-Ausschnitt aus einem Blechronden-Paket 56. Während der Außenumfang der einzelnen Blechronden kreisförmig gestaltet ist, sind am Innenumfang des Blechronden-Pakets 56 einander abwechselnde Vorsprünge oder Nasen 60 und Vertiefüngen 61 ausgebildet. Die Vertiefungen 61 dienen zur exakten Positionierung und Aufnahme von Dauermagneten 58. Bei dem in Fig. 5 dargestellten Beispiel sind die Dauermagnete 58 lamelliert ausgebildet. In etwa radialer Richtung erstrecken sich jeweils acht Dauermagnet-Lamellen 58x für jeden einzelnen Dauermagneten 58, die Lamellen 58x sind also in Umfangsrichtung geschichtet. Die Abmessungen der Dauermagnete und der Ausnehmungen 61 sind derart, daß die Dauermagnete auf ihrer dem Blechronden-Paket 56 zugewandten Seite mit einem Klebstoff beschichtet und in die Ausnehmungen 61 im Preßsitz eingedrückt werden können. Da die beim Motorbetrieb auf die Dauermagnete wirkenden Fliehkräfte die Dauermagnete nach außen zu drücken trachten, haben diese in dem Blechronden-Paket 56 ausreichenden Halt. Die in Fig. 5 dargestellte lamellierte Ausführung der Dauermagnete 58 dient ebenfalls zur Senkung der durch Wirbelströme bedingten Verluste, und zwar ist die lamellierte Ausführung bei solchen Dauermagneten besonders wirksam, die einen spezifischen elektrischen Widerstand von weniger als 2 Ω mm²/m aufweisen. Dauermagnete mit einem derart geringen spezifischen elektrischen Widerstand sind zum Beispiel Magnete vom sogenannten Seltene-Erden-Typ, beispielsweise Magnete aus Samarium-Kobald.

Wie in Fig. 1 auch zu sehen ist, entspricht die axiale Längserstreckung des wirksamen Rotorteils, das heißt der Dauermagnete 8 und des Blechronden-Pakets 6 der axialen Längserstreckung des wirksamen Stators 2. Dieses Fluchten von Rotor- und Statorteilen ist bei sämtlichen hier vorgestellten Ausführungsbeispielen verwirklicht.

Fig. 2 zeigt einen Elektromotor (Generator) als weitere Ausführungsform einer erfindungsgemäßen elektrischen Maschine, hier in Innenläuferbauart.

Der Elektromotor 11 enthält einen feststehenden Stator 12 auf der Innenseite eines Statorgehäuses 17 und einen auf der Achse A drehbar gelagerten Rotor 13 mit einem Rotorträger 15, einem Blechronden-Paket 16 und einer Anzahl von Dauermagneten 18. Auch hier kann das Blechronden-Paket mit Vertiefungen und Nasen ausgebildet werden, komplementär zu der Anordnung nach Fig. 5, also mit nach außen weisenden Nasen am Außenumfang des Blechronden-Pakets.

Auch bei der Ausführungsform nach Fig. 2 können die Dauermagnete 18 lamelliert ausgeführt werden. Bei der lamellierten Ausführung der Dauermagnete soll die Dicke der einzelnen Lamellen nicht mehr als 25 mm betragen, da sonst die Lamellierung mit dem Zweck der Vermeidung von Verlusten durch Wirbelströme praktisch nicht wirksam ist.

In den Fig. 1 und 2 ist die Lamellierungsrichtung der Blechronden von links nach rechts oder von rechts nach links verlaufend gewählt. Anstelle von Blechronden kann man auch eine andere Blechung vorsehen, beispielsweise kann man einzelne Lamellen in Ebenen anordnen, die im wesentlichen radial verlaufen und die Drehachse A des Rotors enthalten. Die Lamellierung der Dauermagnete kann auch in einer anderen Richtung erfolgen, als dies in Fig. 5 gezeigt ist. Die Schichtanordnung kann auch aus der Zeichnungsebene heraus oder in die Zeichnungsebene hinein erfolgen.

Fig. 3 zeigt eine Ausführungsform eines Rotors mit acht länglichen Dauermagneten 28, die in entsprechenden Ausnehmungen am Außenumfang eines Blechronden-Pakets 26 sitzen. Der Rotor 23 ist als Innenläufer ausgebildet. Das Blechronden-Paket 26 dient selbst als Rotorträger, ähnlich wie das für einen Außenläufer in Fig. 5 dargestellte Blechronden-Paket 56.

Fig. 4 zeigt eine weitere Ausführungsform einer erfindungsgemäßen elektrischen Maschine. Diese Maschine ist hier als Elektromotor (Generator) 31 in Außenläuferbauart ausgeführt. Auf der in Fig. 4 rechts einer Seite eines Rotorflansches 34 ist an dessen Außenumfangsbereich mit Hilfe von Schraubenbolzen 42 und Muttern 40, 41 als Rotorträger 35 ein Blechronden-Paket 36 gelagert. Die Schraubenbolzen und Muttern sind isoliert ausgeführt. Die einzelnen Blechronden des Blechronden-Pakets 36 sind durch isolierenden Klebstoff paketiert, ähnlich wie bei den oben erläuterten Ausführungsformen. An beispielsweise acht über den Umfang verteilten Stellen besitzt das Blechronden-Paket 36 achsparallele Durchgangslöcher für die Schraubenbolzen 42, die gegenüber dem Material des Blechronden-Pakets isoliert sind.

Wie bei den anderen Ausführungsbeispielen ist das Blechronden-Paket 36 axial derart bemessen, daß es mit den Dauermagneten 38 und dem wirksamen Teil des Stators 32 fluchtet. Um dies zu verdeutlichen, sind links und rechts an dem Stator 32 die Wickelköpfe 39 dargestellt, die zu den nicht wirksamen Statorteilen gehören. Damit das Blechronden-Paket 36 mit den Dauermagneten und dem Stator 32 fluchtet, befindet sich zwischen dem Rotorflansch 34 und dem Blechronden-Paket 36 ein Distanzstück 43 aus Isolierstoff. Natürlich befinden sich derartige Distanzstücke 43 auf sämtlichen über den Umfang verteilt angeordneten Schraubenbolzen 42, die zur Vermeidung von Wirbelströmen natürlich gegenüber den Blechronden isoliert sind. Auch hier ist eine lamellierte Ausführung der Dauermagnete 38 möglich, wobei die einzelnen Lamellen in der Zeichnungsebene bzw. dazu parallelen Ebenen oder in senkrecht auf der Zeichnungsebene stehenden Ebenen senkrecht auf der Drehachse A orientiert sind.

## Patentansprüche

1. Dauermagnetisch erregte elektrische Maschine, mit einem Stator und einem Rotor, der Dauermagnete (8, 18, 28, 38, 58) und einen geblechten ferromagnetischen Rotorrückschluß (35; 6, 16, 26, 36, 56) aufweist.

2. Elektrische Maschine nach Anspruch 1,
**dadurch gekennzeichnet**,
daß der Rotorrückschluß aus gestanzten und in Ebenen senkrecht zur Drehachse (A) isoliert zueinander paketierten Blechronden aufgebaut ist, deren in einer Richtung parallel zur Achse gemessene Paketlänge derjenigen der Dauermagnete (8, 18, 28, 38, 58) entspricht, wobei letztere in radialer Richtung mit am Umfang wechselndem Vorzeichen magnetisiert sind und auf der Umfangsfläche des Blechronden-Pakets (6, 16, 26, 36, 56) angeordnet sind.

3. Maschine nach Anspruch 1 oder 2,
**dadurch gekennzeichnet**,
daß die Dauermagnete (8, 18, 28, 38, 58) dann, wenn sie einen spezifischen elektrischen Widerstand von weniger als 2 Ω mm²/m aufweisen, aus einzelnen, voneinander isolierten Lamellen (58x) zusammengesetzt sind.

4. Maschine nach Anspruch 3,
**dadurch gekennzeichnet**,
daß die durch die Schichtung der Dauermagnet-Lamellen (58x) gegebene Richtung senkrecht zur radialen Richtung des Rotors (3, 13, 23, 33) bezüglich seiner Drehachse (A) steht.

5. Maschine nach Anspruch 3 oder 4,
**dadurch gekennzeichnet**,
daß die Dauermagnet-Lamellen eine Lamellendicke von höchstens 25 mm aufweisen.

6. Maschine nach einem der Ansprüche 2 bis 5,
**dadurch gekennzeichnet**,
daß die Blechdicke der Blechronden höchstens 1 mm beträgt.

7. Maschine nach einem der Ansprüche 2 bis 6,
**dadurch gekennzeichnet**,
daß das Blechronden-Paket (6, 16) als zusätzliches Teil im Rotor in radialer Richtung zwischen den Dauermagneten (8, 18) und einem Rotorträger (5, 15) angeordnet ist.

8. Maschine nach einem der Ansprüche 2 bis 6,
**dadurch gekennzeichnet**,
daß das Blechronden-Paket (26, 36, 56) selbst als Rotorträger (35) ausgebildet ist.

9. Maschine nach einem Anspruch 8,
**dadurch gekennzeichnet**,
daß das Blechronden-Paket beispielsweise mit Hilfe von Schraubenbolzen (42) mit einem Rotorflansch (34) verbunden ist, wobei zwecks Fluchtung der wirksamen Rotor- und Statorteile zwischen dem Rotorflansch (34) und dem Blechronden-Paket (36) ein Distanzstück (42) angeordnet ist.

10. Maschine nach einem der Ansprüche 2 bis 9,
**dadurch gekennzeichnet**,
daß die Blechronden auf der Innenseite oder Außenseite, auf der sich die Dauermagnete befinden, Vorsprünge (60) mit dazwischen befindlichen Ausnehmungen (71) zur Aufnahme der Dauermagnete (58) aufweisen.

11. Rotor (3, 13, 23, 33) zur Verwendung in einer elektrischen Maschine, die einen Stator und einen dauermagnetischen Rotor mit ferromagnetischem Rotorrückschluß aufweist,
**dadurch gekennzeichnet**,
daß der Rotorrückschluß geblecht ausgeführt ist.

12. Rotor nach Anspruch 12 in Verbindung mit Merkmalen eines der Ansprüche 2 bis 10.
